Europäisches Patentamt

European Patent Office

Office européen des brevets

(19)

(11) Veröffentlichungsnummer: **0 230 466**
**B1**

(12) **EUROPÄISCHE PATENTSCHRIFT**

(45) Veröffentlichungstag der Patentschrifft:
28.02.90

(21) Anmeldenummer: 86904794.4

(22) Anmeldetag: 02.07.86

(86) Internationale Anmeldenummer:
PCT/EP 86/00393

(87) Internationale Veröffentlichungsnummer:
WO 87/00333 (15.01.87 Gazette 87/01)

(51) Int. Cl. [5]: **G 11 B 7/00, G 11 B 7/12**

(54) LASER-PLATTENSPIELER MIT EINER SCHUTZBLENDE.

(30) Priorität: 05.07.85 DE 3524048

(43) Veröffentlichungstag der Anmeldung:
05.08.87 Patentblatt 87/32

(45) Bekanntmachung des Hinweises auf die Patenterteilung:
28.02.90 Patentblatt 90/09

(84) Bennante Vertragsstaaten:
AT BE CH DE FR GB IT LI LU NL SE

(56) Entgegenhaltungen:
EP-A-0 045 537
EP-A-0 064 273
EP-A-0 107 461
FR-A-2 324 062

Patents Abstracts of Japan,Band 6,Nr.129 (P-128)(1007),15.Juli 1982 & JP,A,5755543

Patents Abstracts of Japan,Band 5,Nr.73 (P-61)(745),15.Mai 1981,& JP,A,5622228

(73) Patentinhaber: Deutsche Thomson-Brandt GmbH
Hermann-Schwer-Strasse 3 Postfach 1307
D-7730 Villingen-Schwenningen (DE)

(72) Erfinder: KÜHN, Hans-Robert
Haydnweg 9
D-7742 St. Georgen (DE)

LIBERGRAF, STOCKHOLM 1990

## Beschreibung

Die Erfindung betrifft einen Laser-Plattenspieler gemäß dem Oberbegriff des Anspruchs.

Aus der GB-A-1 538 488 ist ein Laser-Plattenspieler bekannt, bei welchem beim Öffnen eines Gerätedeckels zum Plattenwechseln die Laser-Quelle abgeschaltet und gleichzeitig mechanisch eine Blende über die Lichtaustrittoptik des Abtasters gebracht wird.

Es ist weiterhin bekannt, daß bei CD-Platten aufgrund von Fehlern oder Beschädigungen an der Oberfläche, z. B. an der Etikettseite, sowie kleinsten Löchern der Reflexionsschicht das abtastende Laserlicht ungehindert die Platte durchdringen und dann auf der der Laser-Quelle gegenüberliegenden Seite detektiert werden kann. Beim Plattenspieler aus der o.g. GB-A-1 538 488 hat der Deckel ein Sichtfenster, durch das die Platte bei geschlossenem Deckel sichtbar ist. Es verläuft jedoch ein undurchsichtiger Steg über der Laufbahn des Lasers, so daß auch in diesem Falle die Augen des Benutzers geschützt sind. Bei Geräten ohne Deckel jedoch ist dieser zweifachen Schutz der Augen nicht gegeben. Es ist deshalb erforderlich um Augenschäden unmöglich zu machen, auch im Abspiel-Modus wirksame Schutzvorkehrungen einzusetzen.

Der Erfindung lag folglich die Aufgabe zugrunde, ein Laser-Abspielgerät derart zu verbessern, daß in jedem Fall, d. h. bei allen Betriebsarten, dafür gesorgt ist, daß keine Laserstrahlen austreten, die die Augen eines Benutzers treffen und schädigen könnten.

Diese Aufgabe wird für ein Laser-Abspielgerät nach Oberbegriff des Anspruchs erfindungsgemäß durch die Maßnahmen nach dem Kennzeichen gelöst.

Weitere Einzelheiten sind der nachfolgenden Beschreibung eines Ausführungsbeispiels zu entnehmen, das anhand der Zeichnung beschrieben wird. Diese zeigt bei Teilansichten der Frontseite eines Senkrecht-Spielers in

Figur 1 ein Gerät im Stop-Modus, die Platte noch nicht entnommen;
Figur 2 ein Gerät im Stop-Modus, die Platte ist entnommen;
Figur 3 ein Gerät im Wiedergabe-Modus mit eingelegter Platte.

Zu allen Figuren wurden entsprechende Positionen mit gleichen Nummern versehen.

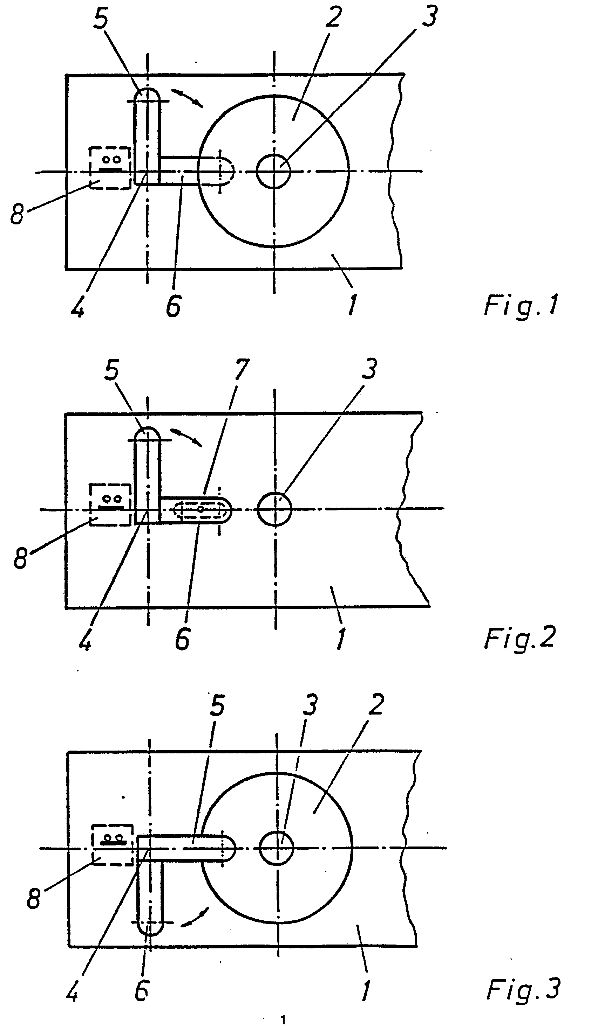

Figur 1 - 3 zeigen eine Teilansicht der Frontseite eines Laser-Plattenspielers, bei dem die Platte in vertikaler Position eingespannt ist und abgetastet wird. In Figur I wird das Gerät im Stop-Mode gezeigt, wobei die Blendeneinrichtung, die aus zwei starr zueinander befestigten Blendenarmen 5 und 6 besteht, um einen Drehpunkt 4 gemeinsam um 90° schwenkbar ist. In der gezeigten Stellung, die die Blendeneinrichtung mit ihrem Blendenarm 6 unter der Platte 2 zeigt, ist die Lichtaustrittoptik des Lasers in seinem gesamten, gestrichelt angeordneten Abtastbereich 7 dargestellt. Wenn die Platte 2 von dem Mittenzapfen 3 entnommen ist, wie das in Figur 2 dargestellt ist, bleibt der Blendenarm 6 in gleicher Position. Während des Stop-Modus ist der Schalter 8 für die Ein- und Ausschaltung des Lasers in der Aus-Stellung. Ein Benutzer des Gerätes I ist also doppelt geschützt vor Laserstrahlen. In der Figur 3 wird das Gerät im Abspiel-Modus gezeigt. Eine Platte 2 ist eingelegt und durch nicht gezeigte Schaltmittel wird die Blendeneinrichtung so um 90° geschwenkt, daß der Blendenarm 5 nunmehr über der Platte 2 den Abtastbereich 7 abdeckt und gleichzeitig den Schalter 8 einschaltet.

Wie dargestellt, ist ein Benutzer vor möglicherweise bei fehlerhafter Platte 2 austretenden Laserstrahlen geschützt, falls er unbewußt und zufällig senkrecht auf den Abtastbereich 7 der Platte 2 sehen sollte. Auch jetzt kann ihn kein Laserstrahl schädigend treffen, der durch kleine Verletzungen der Etikettseite und damit der sehr dünnen Deckschicht und gegebenenfalls der Re-flexionsschicht hindurchtreten kann. Der Blen-denarm 5 deckt solche Laserstrahlen sicher ab.

Das gewählte Beispiel des Senkrechtspielers ist nicht die einzig mögliche Anwendung der Blendeneinrichtung nach der Erfindung. Es sind auch Geräte denkbar, die auf ihrer Oberseite ähnlich einem LP-Plattenspieler die CD-Platte abspielen. Das könnte speziell für tragbare CD-Spieler in Frage kommen. Außerdem ist es denkbar, daß ein CD-Spieler mit einer Schublade so konstruiert ist, daß er bei offener Schublade abspielen kann. Auf jeden Fall wäre es auch bei den derzeit üblichen CD-Spielern, die nur bei ge-schlossener (eingefahrener) Schublade wieder-geben, zur Erfüllung von möglichen Sicherheits-vorschriften sinnvoll und gegebenenfalls notwen-dig, eine Blendeneinrichtung ähnlich der Erfin-dung anzuwenden.

## Patentanspruch

Laser-Plattenspieler mit einer Blendeneinrichtung (5, 6) zum Schutz der Augen vor Laserstrahlen und einem mechanisch gekoppelten Schalter zum Abschalten der Laserquelle, die beide in Abhängigkeit von Schaltmitteln für die Wahl einer der Modi (Betriebsarten) betätigt werden, wobei im Stop-Mondus, wenn die Platte (2) abgenommen ist oder gewechstelt werden soll und dabei über entsprechend gekoppelte Mittel (8) gleichzeitig die Laser-Quelle ausgeschaltet ist, ein erster Arm (6) in die die Lichtaustrittsoptik des Lasers unmittelbar, d.h. unterhalb der Platte (2), abdeckende Position geschwenkt wird, *dadurch gekennzeichnet*, daß die Blendeneinrichtung aus zwei miteinander verbundenen Armen (5, 6) besteht, die um 90° zueinander versetzt und starr miteinander an einem Drehpunkt (4) befestigt sind und gemeinsam um 90° geschwenkt werden können, und daß die Blendeneinrichtung so konstruiert ist, daß im Wiedergabe-Modus der Arm (5) über die abzutastende Platte (2) in radialer Richtung ragt und dabei die Abtastungslaufbahn des Lasers oberhalb der Platte (2) abdeckt.

## Claim

Laser-disc-player with a shield device (5, 6) for protecting the eyes against laser beams and a mechanically coupled switch for shutting off the laser source, both of which are actuated in dependence on switching means for the selection of one of the modes (types of operation), where in the stop mode, if the disc (2) is removed or has to be changed and the laser source is in addition simultaneously switched off via suitably coupled means (8), a first arm is swivelled into a position beneath the disc (2) which directly covers the light outlet optics of the laser, characterised in that the shield device consists of two inter-connected arms (5, 6) which are offset 90° to each other and connected rigidly to each other on a pivot (4) and can be swivelled jointly through 90°, and that the shield device is designed so that in playback mode the second arm (5) projects in a radial direction over the disc (2) to be scanned and at the same time covers the scanning path of the laser above the record (2).

## Revendication

Tourne-disque à laser comprenant un dispositif à écran (5, 6) destiné à portéger les yeux contre les rayons laser, et un interrupteur couplé mécaniquement pour arrêter la source laser, qui tous les deux sont actionnés en fonction de moyens de commutation pour le choix de l'un des modes (modes de service), dans le mode arrêt, un premier bras (6) étant pivoté dans la position recouvrant l'optique de traitement de sortie du faisceau laser immédiatement, c-à-d. au-dessous du disque (2) lorsque le disque (2) a été enlevé ou va être changé et que la source laser est arrêtée simultanément par des moyens (8) couplés de manière correspondante, caractérisé en ce que le dispositif à écran comprend deux bras (5, 6) qui sont montés décalés de 90° l'un par rapport à l'autre et reliés rigidement ensemble au niveau d'un point de rotation (4) et pivotables ensemble de 90°, et que le dispositif à écran est conçu de telle manière que le deuxième bras (5) est en saillie dans le sens radial au-dessus du disque (2) à balayer et recouvre ainsi la piste de lecture du faisceau laser au-dessus du disque (2) en mode reproduction.

l/l

Fig.1

Fig.2

Fig.3